# EUROPEAN PATENT APPLICATION

(11) **EP 4 837 429 A1**
(43) Date of publication of application: **11.11.2026**
(21) Application number: 25826043.9
(22) Date of filing: 24.06.2025
(51) Int. Cl.: A23L 29/256, A23L 29/262, A23L 29/00, A23L 33/21

(54) **HYDROGEL COMPOSITION, PREPARATION METHOD THEREFOR AND USE THEREOF**

(30) Priority: 26.06.2024 CN 202410837346
(71) Applicant: Sichuan Tangji Medical Technology Co., Ltd., Mianyang, Sichuan 621123 (CN)
(72) Inventor: LI, Wenyu, Qingdao, Shandong 266100 (CN); SHU, Yan, Qingdao, Shandong 266100 (CN)
(74) Representative: Croce, Valeria
(86) International application number: PCT/CN2025/103135
(87) International publication number: WO 2026/001979

(57) **Abstract**

A hydrogel composition and a preparation method therefor. The preparation method comprises: dispersing a carboxymethyl cellulose raw material and an alginic acid raw material in a solution, uniformly mixing same, then drying same to obtain a material A, and then mixing the material A with a calcium source to obtain the hydrogel composition. The composition forms a hydrogel after absorbing water, the water absorption rate of the composition is greater than or equal to 40 times, and the elastic modulus of the hydrogel is greater than or equal to 150 Pa. Further provided is the use of the composition in the preparation of digestive tract space-occupying products.

## Description

### CROSS-REFERENCE TO THE RELATED APPLICATIONS

The present invention claims priority to the application No. 2024108373460 filed with the China National Intellectual Property Administration on June 26, 2024, entitled "HYDROGEL COMPOSITION, PREPARATION METHOD THEREFOR, AND USE THEREOF", the entire contents of which are incorporated into the present invention by reference.

### TECHNICAL FIELD

The present invention relates to the technical field of foods, and in particular, to a hydrogel composition, a preparation method therefor, and use thereof.

### BACKGROUND

Obesity and diabetes are major public health challenges worldwide today, having a serious impact on human health and quality of life. At present, treatment methods for weight loss and diabetes mainly include drug treatment, diet control, surgical operations, and the like. Among them, the surgical operation is an effective treatment method, but the surgical risk is relatively high and the recovery time is relatively long. In the process of weight loss through drug treatment, the problem of weight rebound after drug withdrawal often occurs, or the drug itself has some side effects. The diet control is a safe and effective non-surgical approach for weight loss, but requires people who want to lose weight to have strong self-control, and therefore it is often difficult to achieve weight loss effectively in a long time. In order to assist people who want to lose weight in controlling diet, they are usually allowed to eat some products with strong satiety. Therefore, it is of great significance to develop a safe and effective product to assist people in losing weight.

The prior art has proposed some space-occupying gels in the digestive tract to increase satiety, thereby achieving the purpose of weight loss. However, most of the current space-occupying gels in the digestive tract are synthesized by means of chemical crosslinking, so as to ensure that the gels have a higher elastic modulus and a higher water absorption ratio. Although the products obtained thereby have better performance, in the process of chemical crosslinking, the preparation process is relatively complex, the yield after the multiple processing steps is relatively low, and the preparation cost is relatively high, which limits the application of the space-occupying gels.

In summary, how to provide a space-occupying gel that has a simple process, a high elastic modulus, and a high water absorption ratio is of great significance to the development of weight loss products.

In view of this, the present invention is hereby proposed.

### SUMMARY

An objective of the present invention is to provide a hydrogel composition, a preparation method therefor, and use thereof.

The present invention is achieved as follows.

In a first aspect, the present invention provides a hydrogel composition, raw materials of which include a carboxymethyl cellulose raw material, an alginic acid raw material, and a calcium source, and a mass relationship among components in the raw materials satisfies:
${W}_{1} = {m}_{2} / \left({m}_{1}+{m}_{2}\right) \times 100 % , and 10 % \leq {W}_{1} \leq 70 % ;$ and
$f = {m}_{4} / {m}_{3} , and 0.09 \leq f \leq 5.00 ,$
where m₁ is a mass of the carboxymethyl cellulose raw material, m₂ is a mass of the alginic acid raw material, m₃ is a mass of carboxyl groups in the alginic acid raw material, and m₄ is a mass of Ca²⁺ in the calcium source.

In a second aspect, the present invention provides a preparation method for the composition according to any one of the foregoing embodiments, including dispersing a carboxymethyl cellulose raw material and an alginic acid raw material in a solution, uniformly mixing and then drying to obtain a material A, and then mixing the material A with a calcium source to obtain the composition.

In a third aspect, the present invention provides use of the composition according to any one of the foregoing embodiments in the preparation of a digestive tract space-occupying product.

The present invention has the following beneficial effects.

The present invention provides a hydrogel composition, a preparation method therefor and use thereof. The composition can be rapidly gelled in water, wherein the alginic acid raw material is physically crosslinked with calcium ions, and the carboxymethyl cellulose raw material can reduce the sensitivity of the alginic acid raw material to the calcium ions, so that it is convenient to adjust the ratio of the sodium alginate to the calcium source, and the prepared hydrogel retains the medium water absorption rate while exhibiting a significantly improved elastic modulus. The chelation process of the composition of the present invention is all physical crosslinking without a chemical reaction. The gelled hydrogel has a high elastic modulus and excellent water absorption performance, can occupy space in the stomach and reduce food intake, thereby achieving the purposes of weight loss and blood glucose control.

### BRIEF DESCRIPTION OF THE DRAWINGS

In order to more clearly illustrate the technical solutions of the embodiments of the present invention, the drawings required for use in the embodiments will be briefly introduced below. It should be understood that the following drawings only show some embodiments of the present invention, and therefore should not be regarded as limiting the scope. For those of ordinary skill in the art, other related drawings can also be obtained according to these drawings without inventive efforts.

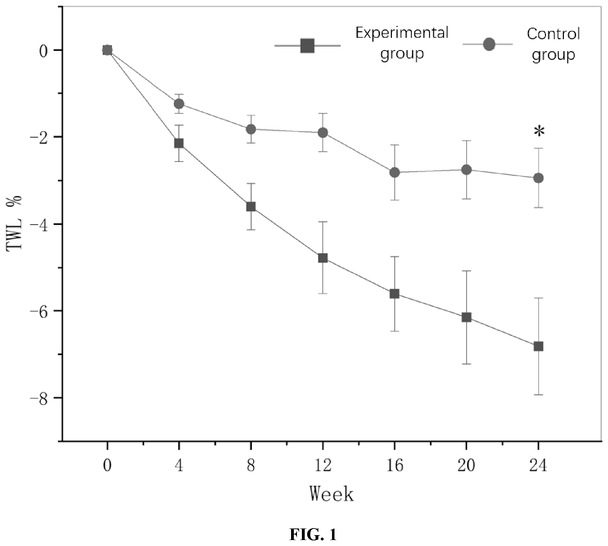

FIG. 1 is a line graph of the weight loss effect provided by Experimental Example 2 of the present invention.

### DETAILED DESCRIPTION OF THE EMBODIMENTS

The implementations of the present invention will be described in detail below in conjunction with examples. However, those skilled in the art will understand that the following examples are only used to illustrate the present invention, and should not be regarded as limiting the scope of the present invention. Where specific conditions are not specified in the examples, the procedures are carried out according to conventional conditions or conditions recommended by manufacturers. The reagents or instruments used, for which manufacturers are not specified, are all conventional products that can be purchased commercially.

The endpoints and any values of the ranges disclosed in the present invention are not limited to the precise ranges or values, and these ranges or values should be understood to encompass values close to these ranges or values. For numerical ranges, the endpoint values of the respective ranges, the endpoint values of the respective ranges and individual point values, and the individual point values can be combined with each other to obtain one or more new numerical ranges, and these numerical ranges should be regarded as specifically disclosed herein.

The prior art uses citric acid to chemically crosslink low-molecular-weight sodium carboxymethyl cellulose to obtain a hydrogel having certain strength and water absorption performance, and the hydrogel can increase satiety in the stomach, thereby achieving the purpose of weight loss. However, the preparation process of the hydrogel adopts chemical crosslinking, in which hydroxyl groups in the sodium carboxymethyl cellulose are used to carry out a chemical reaction to generate ester bonds, thereby realizing the connection between molecules to obtain a hydrogel product. The preparation process is complex, the yield is low, the gel products obtained by means of chemical crosslinking are regulated as medical devices in many countries, and the overall development period of the products is relatively long.

Based on the intragastric space-occupying hydrogels prepared by the existing chemical crosslinking methods, the inventors found through research that there is a key problem in the practical application of hydrogels, namely that the medium water absorption rate and the elastic modulus of a hydrogel tend to be contradictory. Generally speaking, when the medium water absorption rate of a hydrogel increases, the hydrogel is softer, the corresponding elastic modulus of the hydrogel is lower, the mechanical properties are also poorer, and the satiety is prone to failure under the peristalsis and pressure of the digestive tract. When the medium water absorption rate of a hydrogel decreases, the hydrogel is harder, the corresponding elastic modulus of the hydrogel is higher, and the hydrogel has better mechanical properties, but the decrease in the medium water absorption rate leads to a smaller volume of the hydrogel, which also reduces the satiety of the hydrogel.

Therefore, the present invention not only needs to develop a hydrogel prepared by a non-chemical crosslinking method, but also needs to simultaneously improve the medium water absorption rate and the elastic modulus of the hydrogel. Based on this, the inventors propose the following solutions.

In a first aspect, the present invention provides a hydrogel composition, raw materials of which include a carboxymethyl cellulose raw material, an alginic acid raw material, and a calcium source, and a mass relationship among components in the raw materials satisfies:
${W}_{1} = {m}_{2} / \left({m}_{1}+{m}_{2}\right) \times 100 % , and 10 % \leq {W}_{1} \leq 70 % ;$ and
$f = {m}_{4} / {m}_{3} , and 0.09 \leq f \leq 5.00 ,$
where m₁ is a mass of the carboxymethyl cellulose raw material, m₂ is a mass of the alginic acid raw material, m₃ is a mass of carboxyl groups in the alginic acid raw material, and m₄ is a mass of Ca²⁺ in the calcium source, where the units of m₁, m₂, m₃ and m₄ are all the same, and can be, for example, g or kg.

When the composition of the present invention is dispersed in water, the composition can undergo gelation, thereby forming a hydrogel. Specifically, the alginic acid raw material and calcium ions in the composition can chelate in a solution state to form a hydrogel, physical crosslinking occurs, and a connection region called an "egg-box structure" is formed. However, due to the high sensitivity of the alginic acid raw material to the calcium ions, after the alginic acid raw material and the calcium source are directly mixed, the alginic acid raw material and the calcium ions are rapidly chelated in a solution state, and the formed hydrogel has higher strength and poorer water absorption capacity. Meanwhile, there are problems of poorer gelation uniformity and stability. When the hydrogel is used as a space-occupying gel in the digestive tract, the weight loss effect is not ideal.

Therefore, the applicant proposes adding a carboxymethyl cellulose raw material into the system of the alginic acid raw material and the calcium source, wherein the carboxymethyl cellulose raw material can reduce the sensitivity of the alginic acid raw material to calcium ions, thereby delaying the gel point of gelation and realizing the controllable adjustment of the water absorption capacity and the elastic modulus of the composition in the process of gelation. By controlling the values of W₁ and f, the hydrogel formed by the composition provided by the present invention not only has a good water absorption capacity, but also has a relatively high elastic modulus.

Further, in the preparation process of the composition of the present invention, no chemical reaction occurs, and the processes are all physical crosslinking processes. The main molecular chains are formed by chelation of the alginic acid raw material and the calcium source. Compared with the chemical crosslinking process, in which the molecular weight of crosslinking needs to be strictly controlled to control parameters, such as the water absorption capacity and the elastic modulus of the hydrogel, the composition provided by the present invention is more convenient to prepare and has a higher yield; and meanwhile, the physically crosslinked hydrogel does not need to be regulated as a medical device, and the development cost is lower.

When the composition of the present invention is dispersed in water, the composition rapidly absorbs water and swells, and forms a gelatinous hydrogel. After the hydrogel is swallowed, the hydrogel enters the stomach through the esophagus. Since the hydrogel prepared from the composition of the present invention has a high elastic modulus and excellent water absorption performance, the hydrogel can occupy the space in the stomach and reduce food intake, thereby achieving the purposes of weight loss and blood glucose control.

In order to further optimize the water absorption and the elastic modulus of the hydrogel formed after gelation of the composition provided by the present invention, the parameter ranges of W₁ and f can be further controlled.

In an optional embodiment, W₁ satisfies: 10% ≤ W₁ ≤ 60%, and f satisfies: 0.5 ≤ f ≤ 5.00.

More preferably, W₁ satisfies: 15% ≤ W₁ ≤ 45%, and f satisfies: 0.5 ≤ f ≤ 2.00.

For example, W₁ can be 10%, 15%, 20%, 25%, 30%, 35%, 40%, 45%, 50%, 60%, or 70%, and a range value between any two of the above values. f can be 0.09, 0.50, 1.00, 1.50, 2.00, 2.50, 3.00, 3.50, 4.00, 4.50, or 5.00, and a range value between any two of the above values.

In an optional embodiment, the composition absorbs water to form a hydrogel, and the medium water absorption rate of the composition is ≥ 40 times, that is, the composition provided by the present invention can absorb water of more than 40 times the dry basis mass thereof; the elastic modulus of the hydrogel is ≥ 150 Pa; and preferably, the elastic modulus of the hydrogel is ≥ 500 Pa.

By controlling the selection and proportions of the components of the composition in the present invention, the composition provided by the present invention has a good medium water absorption rate (with a water absorption capacity of more than 40 times the dry basis mass of the composition) after forming a hydrogel, exhibits a relatively high elastic modulus in the simulated gastric fluid, can achieve the effect of the hydrogel occupying space in the digestive tract and generating satiety, and can assist in achieving the effect of weight loss.

Further, the selection of the sources of the raw materials is another factor for improving the performance of the hydrogel formed by the composition. Taking sodium alginate as an example, some literature reports that sodium alginate can form a gel at the intragastric pH, which can prolong the emptying time of the stomach, thereby reducing food intake and preventing obesity. However, due to the limitation of different sources, molecular weights, and molecular structures (a ratio between mannuronic acid and guluronic acid) of alginates, the weight loss effects reported in different literature vary widely, which greatly limits the application of alginates in the field of weight loss.

In order to further improve the performance of the hydrogel, in an optional embodiment, a viscosity of the alginic acid raw material is ≥ 2000 mPa·S at a concentration of 2% in solution; and preferably, a viscosity of the alginic acid raw material is 4000 to 30000 mPa·S at a concentration of 2% in solution.

A viscosity of the carboxymethyl cellulose raw material is ≥ 1000 mPa·S at a concentration of 2% in solution.

Since the carboxymethyl cellulose raw material and the alginic acid raw material exhibit different performances due to different molecular weights and molecular structures, the present invention controls the molecular weights and molecular structures of the carboxymethyl cellulose raw material and the alginic acid raw material by controlling the viscosity ranges of the carboxymethyl cellulose raw material and the alginic acid raw material, thereby improving the water absorption and the elastic modulus of the hydrogel formed by the composition.

Preferably, the carboxymethyl cellulose raw material includes, but is not limited to, carboxymethyl cellulose and salts thereof; the salts of carboxymethyl cellulose include any one of sodium carboxymethyl cellulose, potassium carboxymethyl cellulose, and ammonium carboxymethyl cellulose; and any raw material having a carboxymethyl cellulose structure can be used as a raw material for reducing the sensitivity of the sodium alginate and the calcium source.

Preferably, the alginic acid raw material includes, but is not limited to, alginic acid and salts thereof; the salts of alginic acid include any one of sodium alginate, potassium alginate, and ammonium alginate; and any raw material having alginic acid and a carboxyl structure thereof can be used as a raw material that chelates with the calcium source and undergoes physical crosslinking.

Preferably, the calcium source includes, but is not limited to, at least one of calcium carbonate, calcium chloride, calcium citrate, calcium lactate, calcium gluconate, calcium acetate, or calcium phosphate; and all products that can provide a source of calcium can be used as the calcium source of the present invention. More preferably, the calcium source is a low-solubility calcium source; and more preferably, the low-solubility calcium source is one of calcium lactate, calcium carbonate, and calcium phosphate.

It should be noted that since the composition provided by the present invention needs to enter the digestive tract to achieve space occupation in the digestive tract after forming a hydrogel, thereby providing satiety and achieving the effect of weight loss. Therefore, it can be understood that the components in the raw materials of the composition of the present invention are all food-grade components, so as to ensure that the hydrogel formed by the composition is edible.

The applicant further found through research that in the process of forming the space-occupying gel from the composition, the composition can be directly added into water, and different components in the composition can also be added into water separately.

In an optional embodiment, when different components in the composition are added into water separately, the composition of the present invention can also be provided in separate packages, so as to facilitate indicating the mixing sequence of the compositions.

In an optional embodiment, the composition includes a separately packaged material A and material B, wherein the material A is a mixture of the carboxymethyl cellulose raw material and the alginic acid raw material, and the material B is the calcium source. The material A is configured to be mixed with a solution first, and the material B is configured to be added into the solution for dispersion after the material A is dispersed, so as to prevent the calcium source from rapidly reacting with the alginic acid raw material first, which leads to a decrease in the water absorption performance of the hydrogel.

Preferably, in order to ensure that the material A can be rapidly dispersed in the solution to form a colloidal suspension, the particle size of the material A is 0.1 mm to 2 mm, more preferably 0.3 mm to 2 mm, and more preferably 0.3 mm to 1 mm.

In a second aspect, the present invention provides a preparation method for the composition according to any one of the foregoing embodiments, including dispersing a carboxymethyl cellulose raw material and an alginic acid raw material in a solution, uniformly mixing and then drying to obtain a material A, and then mixing the material A with a calcium source to obtain the composition.

In an optional embodiment, in the preparation process of the material A, a concentration of polymers in the solution is 1% to 10%, wherein the concentration of the polymers refers to a total concentration of the carboxymethyl cellulose raw material and the alginic acid raw material.

Preferably, the solution is water, and the drying temperature is 70 °C to 150 °C; and more preferably 70 °C to 100 °C.

The hydrogel composition provided by the present invention is in a solid state before gelation; after being added into water, the composition can be rapidly gelled to obtain a hydrogel; after the hydrogel is eaten, the hydrogel can occupy the space in the digestive tract, provide satiety and reduce meal frequency and food intake, thereby realizing weight loss and aiding in improving diabetes symptoms.

In a third aspect, the present invention provides use of the composition according to any one of the foregoing embodiments in the preparation of a digestive tract space-occupying product.

In an optional embodiment, a use method of the composition provided by the present invention includes adding the solid composition as a whole into water and stirring, or first adding the mixture of the carboxymethyl cellulose raw material and the alginic acid raw material into water and stirring to obtain a pre-gel suspension, and then adding the calcium source into the pre-gel suspension and stirring to obtain the hydrogel.

That is to say, when the composition is packaged into a material A and a material B, the material A is first added into water and stirred to obtain a pre-gel suspension, and then the material B is added into water and stirred to obtain a hydrogel.

In an optional embodiment, in order to ensure that the components in the raw materials are uniformly mixed, the stirring durations of the two stirring steps are both 2 to 5 min, and in order to obtain a hydrogel with a complete shape, it is necessary to ensure that the liquid does not generate a vortex during the stirring process.

### Example 1

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 20 g, and the viscosity thereof was 8000 mPa·S at a concentration of 2% in solution.

The mass of the sodium alginate was 2.5 g, and the viscosity thereof was 5800 mPa·S at a concentration of 2% in solution.

This example further provides a preparation method for the above hydrogel composition, including the following steps.

2.5 g of sodium alginate was added into 500 mL of water and dispersed with stirring, then 20 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 70 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 3.0.

This example further provides a use method of the above hydrogel composition, including first adding the material A into water and stirring for 5 min to obtain a pre-gel suspension, and then adding the material B into the pre-gel suspension and continuing to stir for 5 min, wherein during the two stirring processes, it was ensured that no vortex was generated in the liquid; after the stirring was completed, a hydrogel was obtained; a user swallowed the hydrogel, and the hydrogel entered the digestive tract to exert the space-occupying effect thereof.

### Example 2

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 20 g, and the viscosity thereof was 8000 mPa·S at a concentration of 2% in solution.

The mass of the sodium alginate was 5 g, and the viscosity thereof was 5800 mPa·S at a concentration of 2% in solution.

This example further provides a preparation method for the above hydrogel composition, including the following steps.

5 g of sodium alginate was added into 500 mL of water and dispersed with stirring, then 20 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 90 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 0.61.

The use method of the hydrogel composition provided by this example is the same as that in Example 1.

### Example 3

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 20 g, and the viscosity thereof was 8000 mPa·S at a concentration of 2% in solution.

The mass of the sodium alginate was 5 g, and the viscosity thereof was 5800 mPa·S at a concentration of 2% in solution.

This example further provides a preparation method for the above hydrogel composition, including the following steps.

5 g of sodium alginate was added into 500 mL of water and dispersed with stirring, then 20 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 70 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 0.76.

The use method of the hydrogel composition provided by this example is the same as that in Example 1.

### Example 4

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 20 g, and the viscosity thereof was 8000 mPa·S at a concentration of 2% in solution.

The mass of the sodium alginate was 5 g, and the viscosity thereof was 5800 mPa·S at a concentration of 2% in solution.

This example further provides a preparation method for the above hydrogel composition, including the following steps.

5 g of sodium alginate was added into 500 mL of water and dispersed with stirring, then 20 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 70 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 1.51.

The use method of the hydrogel composition provided by this example is the same as that in Example 1.

### Example 5

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 5 g, and the viscosity thereof was 8000 mPa·S at a concentration of 2% in solution.

The mass of the sodium alginate was 10 g, and the viscosity thereof was 5800 mPa·S at a concentration of 2% in solution.

This example further provides a preparation method for the above hydrogel composition, including the following steps.

10 g of sodium alginate was added into 500 mL of water and dispersed with stirring, then 5 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 70 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 0.09.

The use method of the hydrogel composition provided by this example is the same as that in Example 1.

### Example 6

This example provided a hydrogel composition, which was composed of a material A and a material B, wherein the material A was sodium carboxymethyl cellulose and sodium alginate, and the material B was calcium lactate.

The mass of the sodium carboxymethyl cellulose was 5 g, and the viscosity thereof was 8000 mPa·S at a concentration of 2% in solution.

The mass of the sodium alginate was 10 g, and the viscosity thereof was 5800 mPa·S at a concentration of 2% in solution.

This example further provides a preparation method for the above hydrogel composition, including the following steps.

10 g of sodium alginate was added into 500 mL of water and dispersed with stirring, then 5 g of sodium carboxymethyl cellulose was added into the water, and the sodium alginate, the sodium carboxymethyl cellulose, and the water were mixed under mechanical stirring at 1000 rpm to form a uniform suspension. The suspension was transferred into a metal tray, the thickness of the suspension in the metal tray was controlled to be less than 1 cm, and then the metal tray was dried at 90 °C for 24 h to obtain a solid material A. The solid material A was placed in a pulverizer for pulverization, passed through 10-mesh and 120-mesh sieves, and sieved to obtain a granular material A with a particle size of 0.1 mm to 2 mm, which was packaged for later use.

Calcium lactate was packaged as a material B, and the mass of the calcium lactate in the material B and the mass of the sodium alginate in the material A satisfied f = 0.57.

### Example 7

This example provided a hydrogel composition, which was composed of a material A and a material B, wherein the material A was sodium carboxymethyl cellulose and sodium alginate, and the material B was calcium lactate. The preparation method of the material A was the same as that in Example 3, and the f value was 0.76.

The use method of the hydrogel composition provided by this example included adding the material A and the material B into water simultaneously and stirring for 5 to 10 min, wherein no vortex was generated in the liquid during the stirring process; after the stirring was completed, a hydrogel was obtained; a user swallowed the hydrogel, and the hydrogel entered the digestive tract to exert the space-occupying effect thereof.

### Comparative Example 1

This comparative example provided a hydrogel composition, which was similar to that in Example 6, with the only difference that the material A only included 10 g of sodium alginate, and f = 0.07.

### Comparative Example 2

This comparative example provided a hydrogel composition. The difference from Example 4 lied in that the preparation method of the granular material A was different, wherein the material A only contained sodium alginate, and therefore was not subjected to the steps of dissolving, drying, and pulverizing; then the granular material B, i.e., calcium lactate, was physically mixed with the material A according to the f value ratio in Example 4, and packaged for later use.

### Comparative Example 3

This comparative example provided a hydrogel composition, which was similar to that in Example 4, with the only difference that in the preparation method of the above hydrogel composition, the sodium alginate and the sodium carboxymethyl cellulose were not subjected to the operations of dissolving, drying, and pulverizing, and the three raw materials were mixed by means of direct powder mixing.

### Comparative Example 4

This comparative example provided a hydrogel composition, which was similar to that in Example 4, with the only difference that the sodium carboxymethyl cellulose was replaced with carboxymethyl chitosan.

### Experimental Example 1

### 1) Detection in simulated gastric fluid

Artificial gastric fluid was prepared according to *Pharmacopoeia of the People's Republic of China (2020), Part IV*, then diluted 8 times, and adjusted to a pH of 2.1, serving as artificial gastric fluid simulating at half an hour before a meal (hereinafter referred to as simulated gastric fluid).

60 mL of the simulated gastric fluid was measured and stirred on a magnetic stirrer at a stirring speed of 100 rpm; 0.6 g of the material A of each of Examples 1 to 6 and Comparative Examples 1 to 4 was weighed and slowly added into the above simulated gastric fluid; after stirring for 5 min, the material B was slowly added into the above simulated gastric fluid according to the f value of each of Examples 1 to 4 and Comparative Examples 1 to 4, and stirring was continued for 5 min, so as to simulate the treatment process of gastric fluid.

A piece of 150-mesh gauze was weighed, and the weight was recorded as g₁; then the above stirred mixture was filtered with the 150-mesh gauze to remove unabsorbed simulated gastric fluid (during filtration, attention was paid to gently scraping the liquid on the surface of the gauze by hand until no liquid was visible on the hand to the naked eye, at which point the filtration ended); and the mixture and the gauze were weighed together and recorded as g₂, and the state of the hydrogel obtained after filtration was observed.

The medium water absorption rate of the hydrogel composition in the simulated gastric fluid was calculated according to the formula: MUR = (g₂ - g₁)/0.6. The elastic modulus G' of the filtered hydrogel was measured using a rheometer, with the values uniformly taken at an angular frequency of 10 rad/s, and the results are shown in Table 1.

**Table 1 Properties of the hydrogel compositions and the hydrogels**

| | W₁(%) | f | MUR(g/g) | G'(Pa) | State of the hydrogel composition |
|---|---|---|---|---|---|
| Example 1 | 11.1 | 3.0 | 46.6 | 180.2 | granular |
| Example 2 | 20.0 | 0.61 | 73.11 | 440.7 | granular |
| Example 3 | 20.0 | 0.76 | 70.25 | 500.5 | granular |
| Example 4 | 20.0 | 1.51 | 60.89 | 920.8 | granular |
| Example 5 | 66.7 | 0.09 | 61.00 | 170.2 | granular |
| Example 6 | 66.7 | 0.57 | 40.23 | 1480.3 | granular |
| Example 7 | 20.0 | 0.76 | 63.20 | 780.9 | granular |
| Comparative Example 1 | 100 | 0.07 | 40.38 | 80.32 | granular |
| Comparative Example 2 | 0 | 1.51 | 8.95 | > 10000 | granular |
| Comparative Example 3 | 20.0 | 1.51 | N.A | N.A | pasty |
| Comparative Example 4 | 20.0 | 1.51 | 45 | N.A | prone to agglomeration |

As can be seen from Table 1, after the hydrogel compositions provided by the examples of the present invention are changed into hydrogels, the medium water absorption rate can reach up to 73.11 times the original weight. In addition, when absorbing a large amount of water, the hydrogel compositions provided by the examples of the present invention still maintain its elastic modulus at a relatively high level, so as to prolong the duration of having satiety and improve the weight loss effect. In Comparative Examples 1 and 2, only sodium alginate was added. At a lower f value, the water absorption performance and the elastic modulus thereof both decreased significantly, and at a higher f value, the gel prepared had relatively strong strength, but the water absorption performance decreased sharply, making it difficult to exert the weight loss effect as a space-occupying gel in the digestive tract. Comparative Example 3 changed the preparation method of the hydrogel composition, resulting in a change in the morphology of the hydrogel composition, which was difficult to form a proper shape, and the formed pasty product could not be made into a hydrogel, and therefore could not exert the weight loss effect as a space-occupying gel in the digestive tract either. Comparative Example 4 changed the preparation raw materials of the hydrogel composition, and the obtained hydrogel composition was prone to agglomeration due to the interaction of charges, and was difficult to be configured for use in weight loss products.

### Experimental Example 2

20 volunteers were recruited and randomly divided into 2 groups. The control group took the same amount of sucrose, and the experimental group took 3 g of the hydrogel composition of Example 4 at each of 2 meals per day. The administration time was 30 min before meals, twice a day, namely before lunch and dinner. Meanwhile, nutritional intervention was carried out on the volunteers, and the daily caloric intake was reduced by 300 kcal. The body weights of the volunteers were recorded every 4 weeks for 24 weeks, and the total weight loss was calculated according to the following formula: TWL = (initial body weight - body weight at follow-up)/initial body weight, and the results are shown in FIG. 1.

As can be seen from FIG. 1, combining the nutritional intervention with the use of the hydrogel composition provided by the present invention, a good weight loss effect was achieved. Within 24 weeks, the total weight loss was 6% to 8%, and the weight loss effect was significant, while the weight loss effect of the control group was less than 3%. This shows that the hydrogel compositions provided by the examples of the present invention have a good weight loss effect.

The hydrogel composition, the preparation method therefor, and the use thereof provided by the examples of the present invention have at least the following advantages.
1) The hydrogel composition provided by the present invention is prepared from food-grade raw materials, and can be directly eaten as food.
2) The present invention uses the alginic acid raw material and the calcium source to prepare the hydrogel composition through physical crosslinking and form a hydrogel. Compared with hydrogels prepared by chemical crosslinking methods, the preparation process is simpler and the yield is higher, which is beneficial to large-scale production.
3) The carboxymethyl cellulose raw material is added into the chelation system of the alginic acid raw material and the calcium source. The carboxymethyl cellulose raw material can reduce the sensitivity of the alginic acid raw material to calcium ions, thereby realizing the controllable adjustment of the water absorption capacity and the elastic modulus of the hydrogel composition in the process of gelation. By controlling the values of W₁ and f, the hydrogel formed by the hydrogel composition provided by the present invention not only has a good water absorption capacity, but also has a relatively high elastic modulus.
4) The hydrogel composition prepared by the present invention can rapidly absorb water to form a gel upon contact with water. Since the hydrogel prepared from the hydrogel composition of the present invention has a relatively high elastic modulus and excellent water absorption performance, the hydrogel can occupy the space in the stomach, resist gastric peristalsis, and maintain high satiety to reduce food intake, thereby achieving the purposes of weight loss and blood glucose control.

The above are only preferred embodiments of the present invention, and are not configured to limit the present invention. For those skilled in the art, the present invention can have various changes and variations. Any modifications, equivalent substitutions, improvements, and the like made within the spirit and principle of the present invention shall all be included within the protection scope of the present invention.

### INDUSTRIAL APPLICABILITY

The present invention provides a hydrogel composition, a preparation method therefor, and use thereof. The hydrogel composition is prepared from food-grade raw materials, can be directly eaten as food, has a simpler preparation process and a higher yield, and is beneficial to large-scale production.

## Claims

1. A hydrogel composition, **characterized in that** raw materials of the hydrogel composition comprise a carboxymethyl cellulose raw material, an alginic acid raw material, and a calcium source, and a mass relationship among components in the raw materials satisfies: ${W}_{1} = {m}_{2} / \left({m}_{1}+{m}_{2}\right) \times 100 % , and 10 % ⩽ {W}_{1} ⩽ 70 % ;$ and $f = {m}_{4} / {m}_{3} , and 0.09 ⩽ f ⩽ 5.00 ;$ where m₁ is a mass of the carboxymethyl cellulose raw material, m₂ is a mass of the alginic acid raw material, m₃ is a mass of carboxyl groups in the alginic acid raw material, and m₄ is a mass of Ca²⁺ in the calcium source.

2. The composition according to claim 1, wherein W₁ satisfies: 10% ≤ W₁ ≤ 60%, and f satisfies: 0.5 ≤ f ≤ 5.00; and
more preferably, W₁ satisfies: 15% ≤ W₁ ≤ 45%, and f satisfies: 0.5 ≤ f ≤ 2.00.

3. The composition according to claim 1 or 2, wherein the composition absorbs water to form a hydrogel, the medium water absorption rate of the composition is ≥ 40 times a dry basis mass thereof, and an elastic modulus of the hydrogel is ≥ 150 Pa; and preferably, the elastic modulus of the hydrogel is ≥ 500 Pa.

4. The composition according to claim 1, wherein a viscosity of the carboxymethyl cellulose raw material is ≥ 1000 mPa·S at a concentration of 2% in solution; and
preferably, the carboxymethyl cellulose raw material comprises carboxymethyl cellulose and salts thereof, and the salts of carboxymethyl cellulose comprise any one of sodium carboxymethyl cellulose, potassium carboxymethyl cellulose, and ammonium carboxymethyl cellulose.

5. The composition according to claim 1, wherein a viscosity of the alginic acid raw material is ≥ 2000 mPa·S at a concentration of 2% in solution; and
preferably, the alginic acid raw material comprises alginic acid and salts thereof, and the salts of alginic acid comprise any one of sodium alginate, potassium alginate, and ammonium alginate.

6. The composition according to claim 1, wherein the calcium source comprises at least one of calcium carbonate, calcium chloride, calcium citrate, calcium lactate, calcium gluconate, calcium acetate, or calcium phosphate; more preferably, the calcium source is a low-solubility calcium source; and more preferably, the low-solubility calcium source is one of calcium lactate, calcium carbonate, and calcium phosphate.

7. The composition according to claim 1, wherein a particle size of the composition is 0.1 mm to 2 mm, more preferably 0.3 mm to 2 mm, and more preferably 0.3 mm to 1 mm.

8. A preparation method for the composition according to any one of claims 1 to 7, **characterized in that** the preparation method comprises: dispersing the carboxymethyl cellulose raw material and the alginic acid raw material in a solution, uniformly mixing and then drying to obtain a material A, and then mixing the material A with a calcium source to obtain the composition.

9. The preparation method according to claim 8, wherein in a preparation process of the material A, a concentration of polymers in the solution is 1% to 10%, and the materials are uniformly mixed and then dried to obtain the material A, and then the material A is mixed with the calcium source to obtain the composition; and
the drying temperature is 70 °C to 150 °C; and preferably, the drying temperature is 70 °C to 100 °C.

10. Use of the composition according to any one of claims 1 to 7 in the preparation of a digestive tract space-occupying product.
